# DEMANDE DE BREVET EUROPEEN

(11) **EP 4 465 394 A1**
(43) Date de publication de la demande: **20.11.2024**
(21) Numéro de dépôt: 23305781.9
(22) Date de dépôt: 16.05.2023
(51) Int. Cl.: H01M 10/04, H01M 50/103, H01M 50/15, H01M 50/148, H01M 50/176, H01M 50/188, H01M 50/342, H01M 50/30, H01M 50/528, H01M 50/54, H01M 50/548, H01M 50/55, H01M 50/555, H01M 50/553, H01M 50/566

(54) **CELLULE ÉLECTROCHIMIQUE POUR BATTERIE ÉLECTRIQUE**

(71) Demandeur: Automotive Cells Company SE, 33520 Bruges (FR)
(72) Inventeur: CHAUVEAU, Pierre, 33520 Bruges (FR); MARIN-CURTOUD, Rémi, 33100 Bordeaux (FR); LAATIAOUI, Najib, 33000 Bordeaux (FR)
(74) Mandataire: Lavoix

(57) **Abrégé**

La présente invention concerne une cellule électrochimique (10), comprenant :
- un boîtier (14) ;
- un couvercle (17), définissant un volume intérieur (18) avec le boîtier ;
- une borne électrique (22) assemblée au couvercle ;
- une pluralité d'électrodes (30) comprenant : des couches électrochimiques (36) situées dans le volume intérieur ; et des feuillets (40) prolongeant lesdites couches électrochimiques ; les feuillets formant un faisceau (42) ; et
- un organe de contact (52) électriquement conducteur.

La borne électrique présente une forme tubulaire entre une paroi externe (70) et une paroi interne (68), ladite paroi externe étant assemblée à une ouverture (60) du couvercle. Dans une configuration assemblée, une portion distale (46) du faisceau est prise en sandwich entre l'organe de contact (52) et la paroi interne (68) de la borne électrique.

## Description

La présente invention concerne une cellule électrochimique pour batterie.

L'invention concerne aussi un procédé d'assemblage d'une telle cellule électrochimique.

L'invention s'applique en particulier à la réalisation d'une batterie, notamment pour véhicule électrique ou hybride. On entend par « batterie » une pluralité de cellules électrochimiques reliées électriquement les unes aux autres. Selon un exemple particulier de batterie, la pluralité de cellules électrochimiques est agencée sous la forme d'un ou plusieurs module(s), chaque module comprenant plusieurs cellules électrochimiques raccordées électriquement et solidarisées mécaniquement les unes aux autres.

En particulier, une cellule électrochimique comprend : un boîtier connu sous le terme anglais de « can », fermé par un couvercle connu sous le terme anglais de « cover » ; et un empilement d'éléments électrochimiques, situé dans le boîtier et connu sous le terme anglais de « stack ». L'empilement comprend notamment des électrodes positives et des électrodes négatives, sous forme de couches électrochimiques alternées et séparées deux à deux par une couche de séparation.

Les électrodes positives et les électrodes négatives sont connectées respectivement à une borne positive et à une borne négative du couvercle. Pour réaliser ces connexions, les électrodes comprennent des feuillets ou « tabs », qui dépassent de l'empilement et qui sont soudés les uns aux autres et reliés à l'une des bornes, directement ou par une pièce intermédiaire.

Les électrodes d'un même type forment un faisceau de feuillets à l'extérieur de l'empilement, qui est difficile à manipuler et à relier à la borne lors de l'assemblage de la cellule électrochimique. Un certain espace est donc prévu entre l'empilement et le boîtier et/ou le couvercle pour permettre l'assemblage, qui reste complexe. En particulier, cet espace permet le pliage des tabs en respectant un rayon de courbure minimal, sous peine de risquer un déchirement des tabs.

Une fois la cellule électrochimique assemblée, cet espace représente un volume inutile et a un impact négatif sur la densité énergétique (quantité d'énergie stockable par unité de volume) de la cellule électrochimique pour un boîtier de dimensions données.

Un but de l'invention est donc de fournir une cellule électrochimique présentant une meilleure densité énergétique et/ou une plus grande facilité d'assemblage.

A cet effet, l'invention a pour objet une cellule électrochimique du type précité, comprenant : un boîtier ; un premier couvercle, définissant un volume intérieur avec le boîtier ; une première borne électrique assemblée au premier couvercle ; une première pluralité d'électrodes comprenant : des couches électrochimiques situées dans le volume intérieur ; et des feuillets prolongeant lesdites couches électrochimiques ; les feuillets de la première pluralité d'électrodes formant un premier faisceau et s'étendant les uns contre les autres dans une portion distale dudit premier faisceau ; et un premier organe de contact, électriquement conducteur, adapté pour mettre en contact la première pluralité d'électrodes et la première borne électrique dans une configuration assemblée de la cellule électrochimique. La première borne électrique présente une forme tubulaire entre une paroi externe et une paroi interne, ladite paroi externe étant assemblée à une première ouverture du premier couvercle. Dans la configuration assemblée de la cellule électrochimique, la portion distale du premier faisceau est prise en sandwich entre le premier organe de contact et la paroi interne de la première borne électrique.

Suivant d'autres aspects avantageux de l'invention, la cellule électrochimique comporte l'une ou plusieurs des caractéristiques suivantes, prises isolément ou suivant toutes les combinaisons techniquement possibles :
- la paroi interne de la première borne électrique comporte une empreinte de forme sensiblement complémentaire du premier organe de contact, ladite empreinte débouchant sur un épaulement ; et dans la configuration assemblée de la cellule électrochimique, le premier organe de contact est inséré dans l'empreinte, la portion distale du premier faisceau étant prise en sandwich entre l'épaulement et ledit premier organe de contact ;
- la cellule électrochimique comprend en outre une deuxième pluralité d'électrodes, ladite deuxième pluralité d'électrodes comprenant : des couches électrochimiques, situées dans le volume intérieur ; et des feuillets prolongeant lesdites couches électrochimiques ; les feuillets de la deuxième pluralité d'électrodes formant un deuxième faisceau et s'étendant les uns contre les autres dans une portion distale dudit deuxième faisceau ; la cellule électrochimique étant telle que dans la configuration assemblée, la portion distale du deuxième faisceau est prise en sandwich entre le premier organe de contact et la paroi interne de la première borne électrique ;
- la paroi interne de la première borne électrique comporte un premier et un deuxième bords allongés, en vis-à-vis l'une de l'autre et s'étendant à partir de l'épaulement; et dans la configuration assemblée de la cellule électrochimique, les portions distales du premier et du deuxième faisceaux sont recourbées autour, respectivement, du premier et du deuxième bords allongés de la paroi interne ;
- la cellule électrochimique comprend en outre une pièce de liaison assemblant la première ouverture du premier couvercle et la paroi externe de la première borne électrique ;
- la première ouverture du premier couvercle comporte une première arête, insérée dans la pièce de liaison ;
- la paroi externe de la première borne électrique comporte une deuxième arête insérée dans la pièce de liaison ;
- la cellule électrochimique comprend en outre une membrane d'évacuation, en contact avec le volume intérieur, ladite membrane permettant de maintenir une pression gazeuse, à l'intérieur du boîtier, inférieure à un seuil prédéterminé ;
- le premier organe de contact présente une forme annulaire entre un bord externe et un bord interne, le bord interne entourant un orifice central ; et la membrane est solidaire du bord interne du premier organe de contact, ladite membrane fermant l'orifice central ;
- le premier couvercle présente une découpe au contour fermé ; et la membrane ferme ladite découpe ;
- la cellule électrochimique comprend en outre : une deuxième borne électrique ; une troisième pluralité d'électrodes comprenant : des couches électrochimiques, situées dans le volume intérieur ; et des feuillets prolongeant lesdites couches électrochimiques ; les feuillets de la troisième pluralité d'électrodes formant un troisième faisceau et s'étendant les uns contre les autres dans une portion distale dudit troisième faisceau ; et un deuxième organe de contact, électriquement conducteur, adapté pour mettre en contact la troisième pluralité d'électrodes à la deuxième borne électrique dans une configuration assemblée de la cellule électrochimique ; la cellule électrochimique étant telle que : la deuxième borne électrique présente une forme tubulaire entre une paroi externe et une paroi interne ; et dans la configuration assemblée de la cellule électrochimique, la portion distale du troisième faisceau est prise en sandwich entre le deuxième organe de contact et la paroi interne de la deuxième borne électrique ;
- la paroi externe de la deuxième borne électrique est assemblée à une deuxième ouverture du premier couvercle ;
- la cellule électrochimique comprend en outre un deuxième couvercle, ledit deuxième couvercle définissant le volume intérieur avec le boîtier et le premier couvercle, la paroi externe de la deuxième borne électrique étant assemblée à une ouverture du deuxième couvercle.

L'invention se rapporte en outre à un procédé de réalisation d'une cellule électrochimique telle que décrite ci-dessus, comprenant les étapes suivantes : assemblage du premier couvercle et de la première borne électrique ; assemblage du premier couvercle et du boîtier ; mise en contact de la portion distale du premier faisceau avec la paroi interne de la première borne électrique ; puis assemblage du premier organe de contact avec la paroi interne de la première borne électrique, de sorte à prendre en sandwich ladite portion distale du premier faisceau et à réaliser un contact électrique entre ledit premier faisceau et ladite première borne électrique.

Suivant d'autres aspects avantageux de l'invention, le procédé comporte l'une ou plusieurs des caractéristiques suivantes, prises isolément ou suivant toutes les combinaisons techniquement possibles :
- la pièce de liaison est réalisée par surmoulage de la première ouverture du premier couvercle et de la paroi externe de la première borne électrique, à l'aide d'un matériau polymère, préférentiellement élastomère, de sorte à assembler le premier couvercle et la première borne électrique ;
- le premier organe de contact comprend au moins une nervure ; et le procédé comprend en outre une étape de solidarisation de ladite nervure à la portion distale du premier faisceau, de sorte à réaliser un contact électrique entre ledit premier faisceau et ledit premier organe de contact.

L'invention sera mieux comprise à la lecture de la description qui va suivre, donnée uniquement à titre d'exemple non limitatif et faite en se référant aux dessins sur lesquels :
- la figure 1 est une vue en perspective d'une cellule électrochimique selon un premier mode de réalisation de l'invention, associée à des dispositifs d'interconnexion ;
- la figure 2 est une vue de détail, en coupe, de la cellule électrochimique de la figure 1 ;
- la figure 3 est une vue en coupe d'une étape d'assemblage de la cellule électrochimique des figures 1 et 2 ; et
- la figure 4 est une vue de dessus d'une cellule électrochimique selon un deuxième mode de réalisation de l'invention.

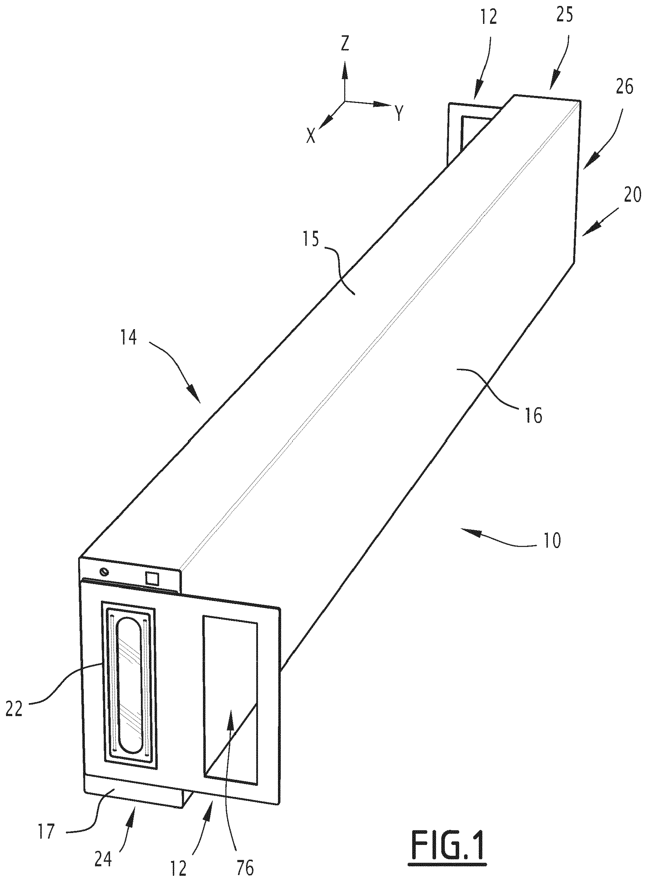

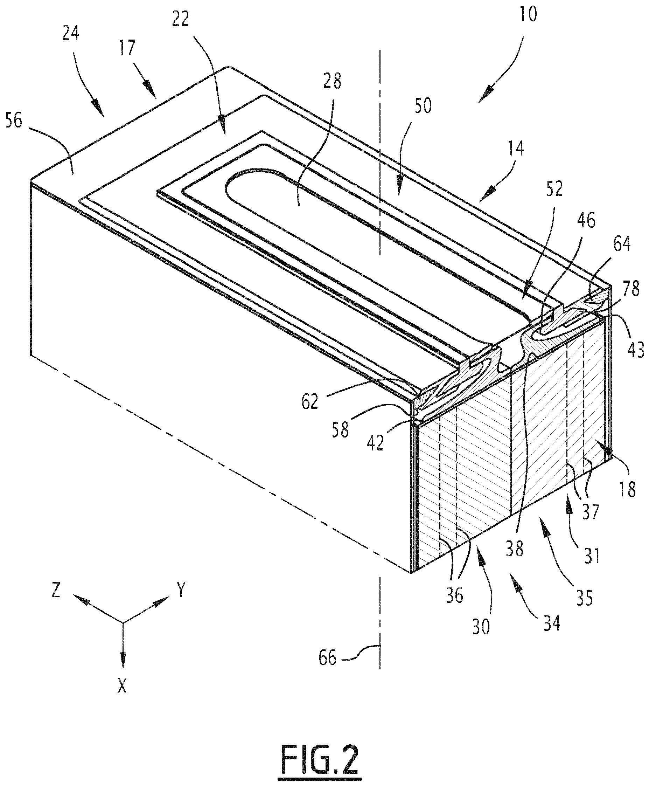

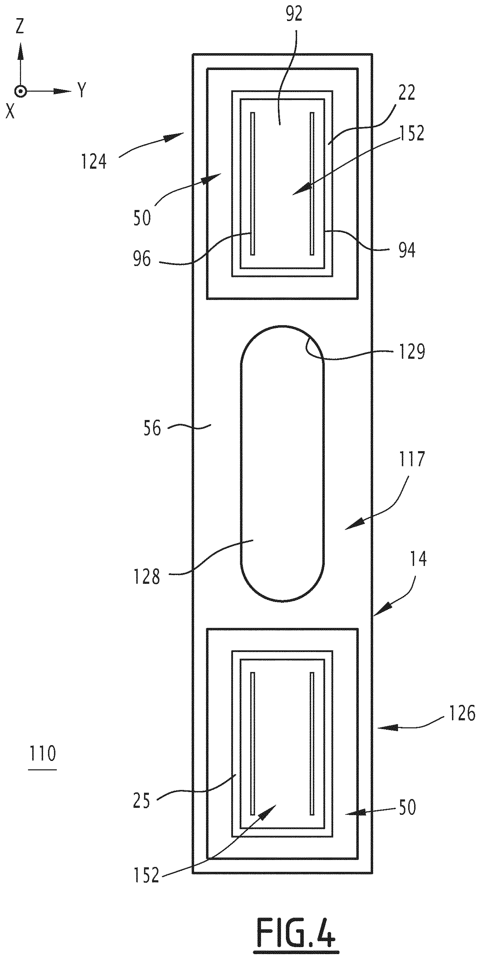

Les figures 1 et 2 représentent une cellule électrochimique 10 selon un premier mode de réalisation de l'invention. La figure 4 représente une cellule électrochimique 110 selon un deuxième mode de réalisation de l'invention.

Les cellules électrochimiques 10 et 110 seront décrites simultanément ci-après, les éléments communs étant désignés par les mêmes numéros de référence.

La cellule électrochimique 10, 110 est par exemple destinée à être intégrée à une batterie (non représentée), notamment pour un véhicule électrique ou hybride (non représenté).

A cet effet, la cellule électrochimique 10, 110 est associée à un ou plusieurs dispositifs 12 d'interconnexion (Figure 1), permettant de relier électriquement plusieurs cellules électrochimiques similaires, en série ou en parallèle, pour former la batterie.

Dans la présente description, on considère une base orthonormée (X, Y, Z) associée à la cellule électrochimique 10, 110.

La cellule électrochimique 10, 110 comprend un boîtier 14. Ledit boîtier comporte quatre parois 15, 16 planes, deux desdites parois 15 s'étendant selon des plans (X, Y) et les deux autres parois 16 s'étendant selon des plans (X, Z).

La forme parallélépipédique du boîtier est notamment adaptée à la constitution d'un module ou d'un pack (non représentés) intégrant au moins une rangée de cellules électrochimiques connectées électriquement entre elles.

La cellule électrochimique 10 comprend en outre un couvercle 17, 117 définissant un volume intérieur 18 (figure 2) avec le boîtier 14. Le couvercle 17, 117 est assemblé à une première extrémité selon X dudit boîtier.

Dans le mode de réalisation des figures 1 et 2, la cellule électrochimique 10 comprend en outre un couvercle additionnel 20, définissant le volume intérieur 18 avec le boîtier 14 et le couvercle 17. Le couvercle additionnel 20 est assemblé à une deuxième extrémité selon X du boîtier 14. Dans le mode de réalisation de la figure 4, la cellule électrochimique 110 comporte un unique couvercle 117 et ladite deuxième extrémité du boîtier est fermée par une cinquième paroi (non représentée) dudit boîtier.

Dans les modes de réalisation représentés, le boîtier 14 présente une forme générale rectangulaire perpendiculairement à la direction X. Plus précisément, une dimension selon Z du boîtier est supérieure à une dimension selon Y dudit boîtier. Les couvercles 17, 20, 117 présentent des formes rectangulaires analogues.

La cellule électrochimique 10, 110 comprend en outre une première borne électrique 22. La première borne électrique 22 est assemblée au couvercle 17, 117. Plus précisément, la cellule électrochimique 10, 110 comprend un premier ensemble 24, 124 assemblé au couvercle 17, 117, ledit premier ensemble incluant la première borne électrique 22. Le premier ensemble 24, 124 sera décrit ultérieurement.

De préférence, la cellule électrochimique 10, 110 comprend en outre une deuxième borne électrique 25. Plus préférentiellement, les première 22 et deuxième 25 bornes électriques sont de polarités opposées. Dans la description ci-après, on considère que les première 22 et deuxième 25 bornes électriques sont de polarités respectivement positive et négative.

Dans les modes de réalisation représentés, la cellule électrochimique 10, 110 comprend un deuxième ensemble 26, 126 incluant la deuxième borne électrique 25 et similaire au premier ensemble 24, 124, comme il sera décrit ultérieurement.

Dans le mode de réalisation des figures 1 et 2, les première 22 et deuxième 25 bornes électriques sont assemblées respectivement au couvercle 17 et au couvercle additionnel 20. Plus précisément, les premier 24 et deuxième 26 ensembles de la cellule électrochimique 10 sont assemblés respectivement au couvercle 17 et au couvercle additionnel 20.

Dans le mode de réalisation de la figure 4, les première 22 et deuxième 25 bornes électriques sont toutes deux assemblées au couvercle 117. Plus précisément, chacun des premier 124 et deuxième 126 ensembles de la cellule électrochimique 110 est assemblé au couvercle 117.

La cellule électrochimique 10, 110 comprend en outre au moins une membrane 28, 128 d'évacuation, qui sera décrite ultérieurement.

La cellule électrochimique 10, 110 comprend en outre des premières 30 et deuxièmes 31 électrodes, visibles sur la figure 2.

Plus précisément, la cellule électrochimique 10, 110 comprend un premier 34 et un deuxième 35 empilements électrochimiques (figure 2), reçus dans le volume intérieur 18. Chacun des empilements 34, 35 comporte des couches électrochimiques 36, 37, empilées selon une même direction d'empilement. Dans le mode de réalisation représenté, la direction d'empilement est la direction Y.

Les couches électrochimiques 36, 37 considérées, dans les premier 34 et deuxième 35 empilements, sont de même polarité. Dans la présente description, on considère que les couches électrochimiques 36, 37 sont de polarité positive. Comme il sera indiqué par la suite, chaque empilement 34, 35 comprend également des couches électrochimiques de polarité négative, empilées en alternance avec lesdites couches électrochimiques 36, 37.

Les premier 34 et deuxième 35 empilements sont adjacents selon la direction d'empilement Y. Chacun desdits empilements comprend une face latérale 38, s'étendant sensiblement selon un plan (Y, Z) et orientée vers le couvercle 17, 117.

Chaque première électrode 30 comprend une couche électrochimique 36 du premier empilement 34. Chaque deuxième électrode 31 comprend une couche électrochimique 37 du deuxième empilement 35.

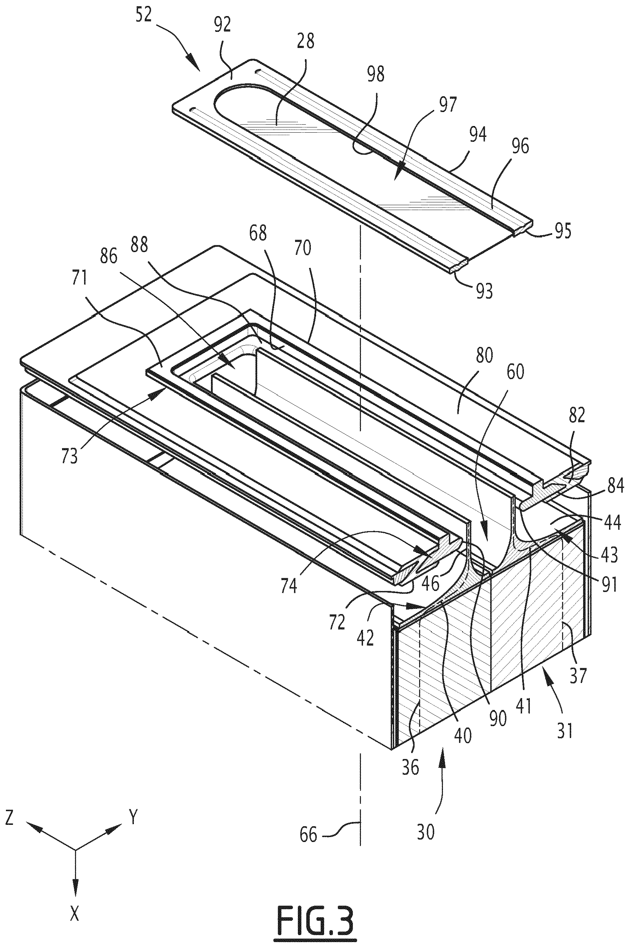

Chaque électrode 30, 31 comprend en outre un feuillet 40, 41 (figure 3) qui prolonge la couche électrochimique 36, 37 correspondante, à partir de la face latérale 38 de l'empilement 34, 35 correspondant. Les feuillets 40, 41 sont formés d'un matériau électriquement conducteur, préférentiellement métallique, par exemple l'aluminium pour la cathode et/ou le cuivre pour l'anode.

Les feuillets 40, 41 des premières 30 et deuxièmes 31 électrodes sont regroupées respectivement en un premier 42 et un deuxième 43 faisceaux. Chacun des faisceaux comporte une portion proximale 44 (figure 3) et une portion distale 46, respectivement proche et éloignée de l'empilement 34, 35 correspondant. Au niveau de la portion distale 46, les feuillets 40, 41 formant chaque faisceau 42, 43 sont appliqués les uns contre les autres, en contact électrique.

Le premier ensemble 24, 124, ci-après dénommé « l'ensemble » 24, 124, va maintenant être décrit. Ledit premier ensemble comporte la première borne 22, dénommée « la borne » 22. La description ci-après du premier ensemble 24, 124 s'applique également au deuxième ensemble 26, 126 comprenant la deuxième borne 25.

L'ensemble 24, 124 comprend : la borne 22 ; une pièce de liaison 50 ; et un organe de contact 52, 152.

L'ensemble 24, 124 est assemblé au couvercle 17, 117. Plus précisément, le couvercle 17, 117 comporte une face dite supérieure 56 et une face dite inférieure 58. Dans une configuration assemblée de la cellule électrochimique 10, 110, représentée sur les figures 1, 2 et 4, la face inférieure 58 est orientée vers le volume intérieur 18 de ladite cellule.

Le couvercle 17, 117 comporte une ouverture 60 (figure 3), définie par un bord 62 refermé sur lui-même.

De préférence, le bord 62 forme une première arête 64. Plus précisément, dans le mode de réalisation représenté, le bord 62 comporte un chanfrein prolongeant la face inférieure 58. Ledit chanfrein forme un premier angle aigu avec la face supérieure 56, matérialisant la première arête 64. Ledit premier angle aigu est préférentiellement compris entre 30° et 60°, plus préférentiellement compris entre 30° et 45°.

Dans le mode de réalisation de la figure 4, le couvercle 117 comporte une ouverture supplémentaire (non représentée), analogue à l'ouverture 60, pour l'assemblage dudit couvercle avec le deuxième ensemble 126.

La borne 22 présente une forme tubulaire, s'étendant selon un axe 66. Dans la configuration assemblée de la cellule électrochimique 10, 110, l'axe 66 est parallèle à X.

Plus précisément, la borne 22 comporte une paroi interne 68, orientée vers l'axe 66, et une paroi externe 70, opposée audit axe 66. La borne 22 comporte en outre une face supérieure 71 et une face inférieure 72, sensiblement planes et perpendiculaires à l'axe 66.

Dans le mode de réalisation représenté, la borne 22 présente une forme générale rectangulaire perpendiculairement à l'axe 66. Plus précisément, dans la configuration assemblée, une dimension selon Z de la borne 22 est supérieure à une dimension selon Y de ladite borne.

La paroi interne 68 de la borne 22 sera décrite ultérieurement.

La paroi externe 70 de la borne 22 comporte une partie supérieure 73 et une partie inférieure 74, adjacentes selon l'axe 66.

La partie supérieure 73 de la paroi externe 70 est destinée à entrer en contact électrique avec un dispositif 12 d'interconnexion, tel que visible sur la figure 1. Dans le mode de réalisation représenté, ladite partie supérieure 73 a une forme parallélépipédique, définie par quatre faces parallèles à X. Ladite forme parallélépipédique est complémentaire de celle d'un logement 76 du dispositif 12 d'interconnexion.

La partie inférieure 74 de la paroi externe 70 est assemblée à l'ouverture 60 du couvercle 17.

Plus précisément, la partie inférieure 74 forme une saillie radiale par rapport à la partie supérieure 73. De préférence, la partie inférieure 74 est inclinée par rapport à l'axe 66, de sorte à former un deuxième angle aigu avec la face inférieure 72. La borne 22 comporte ainsi une deuxième arête 78, formant une jonction entre la paroi externe 70 et la face inférieure 72.

De préférence, le deuxième angle aigu est sensiblement égal au premier angle aigu et compris entre 30° et 60°, préférentiellement compris entre 30° et 45°.

La pièce de liaison 50 assemble la partie inférieure 74 de la paroi externe 70 et l'ouverture 60 du couvercle 17, 117. Plus précisément, la pièce de liaison 50 comporte une portion supérieure 80, une portion médiane 82 et une portion inférieure 84. Les portions supérieure 80 et inférieure 84 sont sensiblement planes et s'étendent dans des plans (Y, Z).

La portion supérieure 80 s'étend partiellement sur la face supérieure 56 du couvercle 17, 117 et sur la face supérieure 70 de la borne 22. La portion inférieure 84 s'étend partiellement sur la face inférieure 72 de la borne 22 et sur la face inférieure 58 du couvercle.

La pièce de liaison 50 présente une section sensiblement en Z dans un plan parallèle à X. Plus précisément, la portion médiane 82 est inclinée par rapport aux portions supérieure 80 et inférieure 84.

La première arête 64 de l'ouverture 60 du couvercle 17, 117 est insérée entre les portions supérieure 80 et médiane 82 de la pièce de liaison 50. Par ailleurs, la deuxième arête 78 de la borne 22 est insérée entre les portions inférieure 84 et médiane 82 de ladite pièce de liaison. Le couvercle 17, 117 et la borne 22 sont ainsi assemblés par la pièce de liaison 50.

La pièce de liaison 50 est formée d'un matériau polymère, de préférence d'un matériau élastomère, comme il sera détaillé par la suite. Le matériau de la pièce de liaison 50 est par exemple choisi parmi les caoutchoucs.

La paroi interne 68 de la borne 22 va à présent être décrite.

La paroi interne 68 comporte une empreinte 86, un épaulement 88 et un premier 90 et un deuxième 91 bords inférieurs.

L'empreinte 86 s'étend selon l'axe 66 entre la face supérieure 71 de la borne et l'épaulement 88.

Dans le mode de réalisation représenté, l'empreinte 86 a une forme sensiblement rectangulaire perpendiculairement à l'axe 66. Dans la configuration assemblée, l'empreinte est allongée selon la direction Z.

L'épaulement 88 s'étend dans un plan (Y, Z) et forme une saillie en direction de l'axe 66 par rapport à l'empreinte 86.

Chacun des premier 90 et deuxième 91 bords inférieurs s'étend selon l'axe 66 entre l'épaulement 88 et la face inférieure 72 de la borne. Les premier 90 et deuxième 91 bords inférieurs sont disposés en vis-à-vis l'un de l'autre.

De préférence, chacun des premier 90 et deuxième 91 bords inférieurs présente une forme allongée sensiblement rectiligne. Dans la configuration assemblée, les premier 90 et deuxième 91 bords inférieurs sont allongés selon Z.

Dans le mode de réalisation représenté, les parois interne 68 et externe 70 de la borne 22 présentent des sections sensiblement rectangulaires perpendiculairement à l'axe 66. Des formes différentes, conformes à la description ci-dessus, sont toutefois possibles.

La borne 22 est réalisée dans un matériau électriquement conducteur, notamment métallique. Par exemple, la borne 22 est réalisée en aluminium, en cuivre ou dans les deux matériaux.

L'organe de contact 52, 152 comporte une surface supérieure 92, une surface inférieure 93 et un bord externe 94. Le bord externe 94 a une forme sensiblement rectangulaire, complémentaire de l'empreinte 86.

Les surfaces supérieure 92 et inférieure 93 sont sensiblement parallèles. La surface inférieure 93 comprend deux nervures 95 rectilignes et parallèles. De préférence, la surface supérieure 92 comprend deux rainures 96 rectilignes et parallèles, chaque rainure 96 correspondant à une nervure 95.

Dans le mode de réalisation des figures 1 et 2, l'organe de contact 52 comporte en outre un orifice central 97, défini par un bord interne 98. Ledit orifice central a de préférence une forme allongée, par exemple rectangulaire ou oblongue. Dans la configuration assemblée, l'orifice central 97 a une forme allongée selon Z.

Dans le mode de réalisation de la figure 4, l'organe de contact 152 ne comporte pas d'orifice central.

L'organe de contact 52, 152 est réalisé dans un matériau électriquement conducteur, notamment métallique, par exemple l'aluminium.

Comme visible sur la figure 2, dans la configuration assemblée, l'organe de contact 52, 152 est inséré dans l'empreinte 86 de la borne 22. De plus, la portion distale 46 de chacun des faisceaux 42, 43 de feuillets 40, 41 est prise en sandwich, selon l'axe 66, entre l'épaulement 88 et la surface inférieure 93 de l'organe de contact. Chacune des nervures 95 s'étend selon Z et est au contact de la portion distale 46 de l'un desdits faisceaux 42, 43.

Plus précisément, dans la configuration assemblée, les faisceaux 42 et 43 sont dans une conformation courbée. Ainsi, les portions distales 46 du premier 42 et du deuxième 43 faisceaux sont recourbées, respectivement autour du premier 90 et du deuxième 91 bords inférieurs de la paroi interne 68 de la borne.

Les premières 30 et deuxièmes 31 électrodes sont ainsi reliées électriquement à la première borne 22 positive de la cellule électrochimique 10, 110.

La membrane 28, 128 d'évacuation est destinée à prévenir l'apparition d'une surpression gazeuse à l'intérieur du boîtier 14 de la cellule électrochimique 10, 110.

Selon un premier mode de réalisation, la membrane 28, 128 est au moins partiellement perméable aux gaz. Du gaz se dégageant des empilements 34, 35 peut ainsi être évacué hors de la cellule électrochimique 10, 110.

Selon un deuxième mode de réalisation, la membrane 28, 128 est configurée pour se rompre en cas de surpression à l'intérieur de la cellule, ladite surpression étant supérieure à un seuil déterminé. Selon ledit deuxième mode de réalisation, la membrane est par exemple formée d'une fine couche d'aluminium, avec une géométrie configurée pour amorcer la rupture au-delà de la surpression seuil.

Dans le mode de réalisation des figures 1 et 2, la membrane 28 est incorporée à l'ensemble 24. Plus précisément, la membrane 28 est assemblée au bord interne 98 de l'organe de contact 52, obturant l'orifice central 97.

En particulier, dans le mode de réalisation des figures 1 et 2, la cellule électrochimique 10 comporte deux membranes 28, incluses respectivement dans les premier 24 et deuxième 26 ensembles.

Dans le mode de réalisation de la figure 4, le couvercle 117 comporte une découpe 129 au contour fermé ; et la membrane 128 obture ladite découpe. Dans l'exemple représenté, la découpe 129 est de forme oblongue et s'étend selon Z.

Par ailleurs, dans le mode de réalisation de la figure 4, la membrane 128 est disposée selon Z entre les premier 124 et deuxième 126 ensembles.

La deuxième borne 25 de la cellule électrochimique 10, 110, de polarité négative, est reliée à des électrodes incluant les couches électrochimiques de polarité négative des premier 34 et deuxième 35 empilements, de manière similaire à celle décrite ci-dessus pour la première borne 22.

Dans le mode de réalisation des figures 1 et 2, les feuillets 40, 41 des électrodes positive et négative sont disposés respectivement à une première et à une deuxième extrémités selon X des empilements 34, 35. Plus précisément, les feuillets 40, 41 des électrodes positive et négative s'étendent à partir des faces latérales 38 opposées des empilements 34, 35.

Dans le mode de réalisation de la figure 4, les feuillets 40, 41 des électrodes positive et négative sont disposés respectivement à une première et à une deuxième extrémités selon Z des empilements 34, 35. Plus précisément, les feuillets 40, 41 des électrodes positive et négative s'étendent à partir d'une même face latérale 38 des empilements 34, 35.

La figure 3 montre une étape de réalisation de la cellule électrochimique 10. Plus précisément, sur la figure 3, l'organe de contact 52 est dissocié de la borne 22 ; le couvercle 17 est dissocié du boîtier 14 ; et les faisceaux 42, 43 sont dans une conformation initiale, dans laquelle les portions distales 46 sont planes.

Un procédé de réalisation de la cellule électrochimique 10 des figures 1 et 2 va maintenant être décrit. Un procédé similaire permet la réalisation de la cellule électrochimique 110 de la figure 4.

Le boîtier 14 et les empilements 34, 35 sont réalisés de manière connue, par exemple via la technique de Z-folding. Les empilements 34, 35 sont disposés dans le volume intérieur 18 du boîtier. Les feuillets 40, 41 sont solidarisés les uns aux autres au niveau des parties distales 46 des faisceaux 42, 43, par exemple par soudage à ultrasons. Lesdits faisceaux 42, 43, notamment les parties distales 46, sont alors dans une conformation initiale non courbée, visible sur la figure 3.

De même, l'organe de contact 52 et la membrane 54, solidaires l'un de l'autre, sont réalisés selon des méthodes connues.

Par ailleurs, le couvercle 17 et la borne 22 sont réalisés indépendamment l'un de l'autre. Ensuite, le couvercle 17 et la borne 22 sont assemblés par l'ajout de la pièce de liaison 50. De manière préférentielle, la pièce de liaison 50 est réalisée par surmoulage de l'ouverture 60 du couvercle et de la paroi externe 70 de la borne 22.

Par exemple, le couvercle 17 et la borne 22 sont placés dans un moule à injection adapté ; et un matériau polymère est injecté à l'état fluide dans ledit moule, puis solidifié. Les première 64 et deuxième 78 arêtes se trouvent ainsi insérées dans la pièce plastique ainsi formée, solidarisant le couvercle 17 et la borne 22.

Ensuite, le couvercle 17 est placé à la première extrémité du boîtier 14, de sorte que les parties distales 46 des faisceaux 42, 43 soient disposées dans l'ouverture 60, en vis-à-vis de la paroi interne 68 de la borne 22. De préférence, lorsque le couvercle 17 entre en contact avec le boîtier 14, les premier 90 et deuxième 91 bords inférieurs de la borne appuient sur une jonction entre les parties proximale 44 et distale 46 des faisceaux, engendrant une courbure desdits faisceaux à l'opposé de l'axe 66.

Ensuite, l'organe de contact 52 est inséré dans l'empreinte 86 de la borne 22, de manière à rabattre les parties distales 46 des faisceaux sur l'épaulement 88. Chaque partie distale 46 de faisceau prend donc la conformation recourbée de la figure 2, autour du premier 90 ou du deuxième 91 bord inférieur de la borne.

Ainsi, la partie distale 46 de chaque faisceau 42, 43 est prise en sandwich entre la surface inférieure 98 de l'organe de contact 52 et l'épaulement 88 de la paroi interne 68 de la borne.

L'organe de contact 52 est pressé dans l'empreinte 86, afin d'assurer un contact électrique entre chaque faisceau 42, 43 et la borne 22. Puis une soudure de solidarisation est réalisée, de préférence par soudage laser. Par exemple, un outil laser est appliqué le long de chaque rainure 96 de la surface supérieure 92 de l'organe de contact 52. L'énergie transférée est communiquée à la nervure 95 située sous chaque rainure. Chaque nervure 95 de la surface inférieure 98 se trouve donc soudée à l'un des faisceaux 42, 43.

Ensuite, le bord externe 94 de l'organe de contact 52 est solidarisé à l'empreinte 86 de la borne ; et un bord du couvercle 17 est solidarisé au boîtier 14. Ces solidarisations sont par exemple effectuées par soudage laser.

Un tel procédé de réalisation assure un contact électrique optimal entre les électrodes 30, 31 et la borne 22 de la cellule électrochimique 10, 110 sans nécessiter d'opérations complexes lors de l'assemblage. Le nombre de soudures est diminué par rapport aux procédés connus, ce qui diminue la résistance électrique entre les électrodes et la borne, donc les pertes d'énergie.

L'espace résiduel entre les empilements 34, 35 et le couvercle 17, 117 dans le volume intérieur 18, est de taille modérée. La densité énergétique de la cellule électrochimique 10, 110 est donc optimisée.

Par ailleurs, la forme allongée selon Z de la membrane 28, 128 permet de disposer d'un évent de grande taille. Une telle forme limite la surpression interne de la cellule, ainsi que les risques d'explosions, lors d'un emballement thermique lors de ce mode de fonctionnement accidentel de la cellule.

## Revendications

1. Cellule électrochimique (10, 110) pour batterie, comprenant :
- un boîtier (14) ;
- un premier couvercle (17, 117), définissant un volume intérieur (18) avec le boîtier ;
- une première borne électrique (22) assemblée au premier couvercle ;
- une première pluralité d'électrodes (30) comprenant : des couches électrochimiques (36) situées dans le volume intérieur ; et des feuillets (40) prolongeant lesdites couches électrochimiques ; les feuillets de la première pluralité d'électrodes formant un premier faisceau (42) et s'étendant les uns contre les autres dans une portion distale (46) dudit premier faisceau ; et
- un premier organe de contact (52, 152), électriquement conducteur, adapté pour mettre en contact la première pluralité d'électrodes (30) et la première borne électrique (22) dans une configuration assemblée de la cellule électrochimique ;
la cellule électrochimique étant **caractérisée en ce que** :
- la première borne électrique présente une forme tubulaire entre une paroi externe (70) et une paroi interne (68), ladite paroi externe étant assemblée à une première ouverture (60) du premier couvercle ; et
- dans la configuration assemblée de la cellule électrochimique, la portion distale (46) du premier faisceau est prise en sandwich entre le premier organe de contact (52, 152) et la paroi interne (68) de la première borne électrique.

2. Cellule électrochimique selon la revendication 1, dans laquelle :
- la paroi interne (68) de la première borne électrique comporte une empreinte (86) de forme sensiblement complémentaire du premier organe de contact, ladite empreinte débouchant sur un épaulement (88) ; et
- dans la configuration assemblée de la cellule électrochimique, le premier organe de contact (52, 152) est inséré dans l'empreinte, la portion distale du premier faisceau étant prise en sandwich entre l'épaulement (88) et ledit premier organe de contact.

3. Cellule électrochimique selon la revendication 1 ou 2, comprenant en outre une deuxième pluralité d'électrodes (31), ladite deuxième pluralité d'électrodes comprenant : des couches électrochimiques (37), situées dans le volume intérieur ; et des feuillets (41) prolongeant lesdites couches électrochimiques ; les feuillets de la deuxième pluralité d'électrodes formant un deuxième faisceau (43) et s'étendant les uns contre les autres dans une portion distale (46) dudit deuxième faisceau ;
la cellule électrochimique étant telle que dans la configuration assemblée, la portion distale du deuxième faisceau (43) est prise en sandwich entre le premier organe de contact (52, 152) et la paroi interne (68) de la première borne électrique.

4. Cellule électrochimique selon la revendication 3 prise en combinaison avec la revendication 2, dans laquelle :
- la paroi interne (68) de la première borne électrique comporte un premier (90) et un deuxième (91) bords allongés, en vis-à-vis l'une de l'autre et s'étendant à partir de l'épaulement (88) ; et
- dans la configuration assemblée de la cellule électrochimique, les portions distales du premier et du deuxième faisceaux sont recourbées autour, respectivement, du premier (90) et du deuxième (91) bords allongés de la paroi interne.

5. Cellule électrochimique selon l'une des revendications précédentes, comprenant en outre une pièce de liaison (50) assemblant la première ouverture (60) du premier couvercle et la paroi externe (70) de la première borne électrique.

6. Cellule électrochimique selon la revendication 5, dans laquelle la première ouverture (60) du premier couvercle comporte une première arête (64), insérée dans la pièce de liaison (50).

7. Cellule électrochimique selon la revendication 5 ou 6, dans laquelle la paroi externe de la première borne électrique comporte une deuxième arête (78) insérée dans la pièce de liaison (50).

8. Cellule électrochimique selon l'une des revendications précédentes, comprenant en outre une membrane (28, 128) d'évacuation, en contact avec le volume intérieur (18), ladite membrane permettant de maintenir une pression gazeuse, à l'intérieur du boîtier (14), inférieure à un seuil prédéterminé.

9. Cellule électrochimique (10) selon la revendication 8, dans laquelle :
- le premier organe de contact (52) présente une forme annulaire entre un bord externe (94) et un bord interne (98), le bord interne entourant un orifice central (97) ; et
- la membrane (28) est solidaire du bord interne du premier organe de contact, ladite membrane fermant l'orifice central.

10. Cellule électrochimique (110) selon la revendication 8, dans laquelle :
- le premier couvercle (117) présente une découpe (129) au contour fermé ; et
- la membrane (128) ferme ladite découpe.

11. Cellule électrochimique selon l'une des revendications précédentes, comprenant en outre :
- une deuxième borne électrique (25) ;
- une troisième pluralité d'électrodes (30, 31) comprenant : des couches électrochimiques, situées dans le volume intérieur (18) ; et des feuillets (40, 41) prolongeant lesdites couches électrochimiques ; les feuillets de la troisième pluralité d'électrodes formant un troisième faisceau (42, 43) et s'étendant les uns contre les autres dans une portion distale dudit troisième faisceau ; et
- un deuxième organe de contact (52, 152), électriquement conducteur, adapté pour mettre en contact la troisième pluralité d'électrodes à la deuxième borne électrique dans une configuration assemblée de la cellule électrochimique ;
la cellule électrochimique étant telle que :
- la deuxième borne électrique présente une forme tubulaire entre une paroi externe (70) et une paroi interne (68) ; et
- dans la configuration assemblée de la cellule électrochimique, la portion distale du troisième faisceau est prise en sandwich entre le deuxième organe de contact et la paroi interne de la deuxième borne électrique.

12. Cellule électrochimique (110) selon la revendication 11, dans laquelle la paroi externe de la deuxième borne électrique (25) est assemblée à une deuxième ouverture du premier couvercle (117).

13. Cellule électrochimique (10) selon la revendication 11, comprenant en outre un deuxième couvercle (20), ledit deuxième couvercle définissant le volume intérieur (18) avec le boîtier et le premier couvercle, la paroi externe de la deuxième borne électrique (25) étant assemblée à une ouverture du deuxième couvercle.

14. Procédé de réalisation d'une cellule électrochimique (10, 110) selon l'une des revendications précédentes, comprenant les étapes suivantes :
- assemblage du premier couvercle (17, 117) et de la première borne électrique (22) ;
- assemblage du premier couvercle (17, 117) et du boîtier (14) ;
- mise en contact de la portion distale (46) du premier faisceau (42) avec la paroi interne (68) de la première borne électrique ; puis
- assemblage du premier organe de contact (52, 152) avec la paroi interne (68) de la première borne électrique, de sorte à prendre en sandwich ladite portion distale (46) du premier faisceau et à réaliser un contact électrique entre ledit premier faisceau et ladite première borne électrique.

15. Procédé selon la revendication 14 prise en combinaison avec l'une des revendications 5 à 7, dans lequel la pièce de liaison (50) est réalisée par surmoulage de la première ouverture (60) du premier couvercle et de la paroi externe (70) de la première borne électrique, à l'aide d'un matériau polymère, préférentiellement élastomère, de sorte à assembler le premier couvercle et la première borne électrique.

## Revendications modifiées

### Revendications modifiées conformément à la règle 137(2) CBE.

1. Cellule électrochimique (10, 110) pour batterie, comprenant :
- un boîtier (14) ;
- un premier couvercle (17, 117), définissant un volume intérieur (18) avec le boîtier ;
- une première borne électrique (22) assemblée au premier couvercle ;
- une première pluralité d'électrodes (30) comprenant : des couches électrochimiques (36) situées dans le volume intérieur ; et des feuillets (40) prolongeant lesdites couches électrochimiques ; les feuillets de la première pluralité d'électrodes formant un premier faisceau (42) et s'étendant les uns contre les autres dans une portion distale (46) dudit premier faisceau ; et
- un premier organe de contact (52, 152), électriquement conducteur, adapté pour mettre en contact la première pluralité d'électrodes (30) et la première borne électrique (22) dans une configuration assemblée de la cellule électrochimique ;
la première borne électrique présentant une forme tubulaire s'étendant selon un axe (66), entre une paroi externe (70) et une paroi interne (68), ladite paroi externe étant assemblée à une première ouverture (60) du premier couvercle ;
la cellule électrochimique étant **caractérisée en ce que** :
- la paroi interne (68) de la première borne électrique comporte : une empreinte (86) de forme sensiblement complémentaire du premier organe de contact et s'étendant selon l'axe (66) de la première borne électrique ; et un épaulement (88) sur lequel débouche ladite empreinte, l'épaulement s'étendant perpendiculairement à l'axe (66) de la première borne électrique et formant une saillie en direction dudit axe par rapport à l'empreinte ; et
- dans la configuration assemblée de la cellule électrochimique, le premier organe de contact (52, 152) est inséré dans l'empreinte, la portion distale du premier faisceau étant prise en sandwich entre l'épaulement (88) et ledit premier organe de contact.

2. Cellule électrochimique selon la revendication 1, comprenant en outre une deuxième pluralité d'électrodes (31), ladite deuxième pluralité d'électrodes comprenant : des couches électrochimiques (37), situées dans le volume intérieur ; et des feuillets (41) prolongeant lesdites couches électrochimiques ; les feuillets de la deuxième pluralité d'électrodes formant un deuxième faisceau (43) et s'étendant les uns contre les autres dans une portion distale (46) dudit deuxième faisceau ;
la cellule électrochimique étant telle que dans la configuration assemblée, la portion distale du deuxième faisceau (43) est prise en sandwich entre le premier organe de contact (52, 152) et l'épaulement (88) de la paroi interne (68) de la première borne électrique.

3. Cellule électrochimique selon la revendication 2, dans laquelle :
- la paroi interne (68) de la première borne électrique comporte un premier (90) et un deuxième (91) bords allongés, en vis-à-vis l'une de l'autre et s'étendant à partir de l'épaulement (88) selon l'axe (66) de la première borne électrique ; et
- dans la configuration assemblée de la cellule électrochimique, les portions distales du premier et du deuxième faisceaux sont recourbées autour, respectivement, du premier (90) et du deuxième (91) bords allongés de la paroi interne.

4. Cellule électrochimique selon l'une des revendications précédentes, comprenant en outre une pièce de liaison (50) assemblant la première ouverture (60) du premier couvercle et la paroi externe (70) de la première borne électrique.

5. Cellule électrochimique selon la revendication 4, dans laquelle la première ouverture (60) du premier couvercle comporte une première arête (64), insérée dans la pièce de liaison (50).

6. Cellule électrochimique selon la revendication 4 ou 5, dans laquelle la paroi externe de la première borne électrique comporte une deuxième arête (78) insérée dans la pièce de liaison (50).

7. Cellule électrochimique selon l'une des revendications précédentes, comprenant en outre une membrane (28, 128) d'évacuation, en contact avec le volume intérieur (18), ladite membrane permettant de maintenir une pression gazeuse, à l'intérieur du boîtier (14), inférieure à un seuil prédéterminé.

8. Cellule électrochimique (10) selon la revendication 7, dans laquelle :
- le premier organe de contact (52) présente une forme annulaire entre un bord externe (94) et un bord interne (98), le bord interne entourant un orifice central (97) ; et
- la membrane (28) est solidaire du bord interne du premier organe de contact, ladite membrane fermant l'orifice central.

9. Cellule électrochimique (110) selon la revendication 7, dans laquelle :
- le premier couvercle (117) présente une découpe (129) au contour fermé ; et
- la membrane (128) ferme ladite découpe.

10. Cellule électrochimique selon l'une des revendications précédentes, comprenant en outre :
- une deuxième borne électrique (25) ;
- une troisième pluralité d'électrodes (30, 31) comprenant : des couches électrochimiques, situées dans le volume intérieur (18) ; et des feuillets (40, 41) prolongeant lesdites couches électrochimiques ; les feuillets de la troisième pluralité d'électrodes formant un troisième faisceau (42, 43) et s'étendant les uns contre les autres dans une portion distale dudit troisième faisceau ; et
- un deuxième organe de contact (52, 152), électriquement conducteur, adapté pour mettre en contact la troisième pluralité d'électrodes à la deuxième borne électrique dans une configuration assemblée de la cellule électrochimique ;
la cellule électrochimique étant telle que :
- la deuxième borne électrique présente une forme tubulaire entre une paroi externe (70) et une paroi interne (68) ; et
- dans la configuration assemblée de la cellule électrochimique, la portion distale du troisième faisceau est prise en sandwich entre le deuxième organe de contact et la paroi interne de la deuxième borne électrique.

11. Cellule électrochimique (110) selon la revendication 10, dans laquelle la paroi externe de la deuxième borne électrique (25) est assemblée à une deuxième ouverture du premier couvercle (117).

12. Cellule électrochimique (10) selon la revendication 10, comprenant en outre un deuxième couvercle (20), ledit deuxième couvercle définissant le volume intérieur (18) avec le boîtier et le premier couvercle, la paroi externe de la deuxième borne électrique (25) étant assemblée à une ouverture du deuxième couvercle.

13. Procédé de réalisation d'une cellule électrochimique (10, 110) selon l'une des revendications précédentes, comprenant les étapes suivantes :
- assemblage du premier couvercle (17, 117) et de la première borne électrique (22) ;
- assemblage du premier couvercle (17, 117) et du boîtier (14) ;
- mise en contact de la portion distale (46) du premier faisceau (42) avec la paroi interne (68) de la première borne électrique ; puis
- assemblage du premier organe de contact (52, 152) avec la paroi interne (68) de la première borne électrique, de sorte à prendre en sandwich ladite portion distale (46) du premier faisceau et à réaliser un contact électrique entre ledit premier faisceau et ladite première borne électrique.

14. Procédé selon la revendication 13 prise en combinaison avec l'une des revendications 4 à 6, dans lequel la pièce de liaison (50) est réalisée par surmoulage de la première ouverture (60) du premier couvercle et de la paroi externe (70) de la première borne électrique, à l'aide d'un matériau polymère, préférentiellement élastomère, de sorte à assembler le premier couvercle et la première borne électrique.
